# FASCICULE DE BREVET EUROPEEN

(11) **EP 2 029 669 B1**
(45) Date de publication et mention de la délivrance du brevet: **11.08.2010**
(21) Numéro de dépôt: 07789003.6
(22) Date de dépôt: 14.06.2007
(51) Int. Cl.: C08L 67/04, C08L 77/00, C08L 23/00, C08L 33/06

(54) **MATERIAU COMPOSITE A BASE DE POLYACIDE LACTIQUE ET DE POLYAMIDE PRESENTANT UNE RESISTANCE AUX CHOCS AMELIOREE, SON PROCEDE DE FABRICATION ET UTILISATION**
AUF POLYMILCHSÄURE UND EINEM POLYAMID BASIERENDER VERBUNDSTOFF MIT ERHÖHTER SCHLAGFESTIGKEIT, HERSTELLUNGSVERFAHREN UND VERWENDUNG
COMPOSITE BASED ON POLYLACTIC ACID AND A POLYAMIDE, HAVING IMPROVED IMPACT RESISTANCE, ITS MANUFACTURING PROCESS AND USE

(30) Priorité: 16.06.2006 FR 0652158; 11.07.2006 US 819860 P
(43) Date de publication de la demande: 04.03.2009
(73) Titulaire: ARKEMA FRANCE, 92700 Colombes (FR)
(72) Inventeur: BRULE, Benoît, F-27170 Beaumont Le Roger (FR); FINE, Thomas, F-77300 Fontainebleau (FR); FLAT, Jean-Jacques, F-27170 Goupillieres (FR); YASUDA, Maho, Kyoto City, Kyoto (FR)
(74) Mandataire: Lhoste, Catherine
(86) Numéro de dépôt international: PCT/FR2007/051438
(87) Numéro de publication internationale: WO 2007/144543

(56) Documents cités:
- WO-A-2005/059031
- JP-A- 2004 051 835
- US-A1- 2004 242 803
- DATABASE WPI Week 199808 Derwent Publications Ltd., London, GB; AN 1998-082830 XP002456488 -& JP 09 316310 A (KANEBO LTD) 9 décembre 1997 (1997-12-09)

## Description

La présente invention se rapporte à un matériau composite à base de polyacide lactique et de polyamide présentant une résistance aux chocs améliorée.

Les matériaux à base de polyacide lactique (PLA) sont actuellement utilisés dans la fabrication de fibres ou de films.

Si de tels matériaux présentent un intérêt majeur du fait de leurs propriétés biodégradables et renouvelables, ils restent peu employés dans un certain nombre de domaines du fait de leurs propriétés intrinsèques relativement faibles, notamment mécaniques.

En particulier, l'utilisation de matériaux à base de polyacide lactique dans le marché de l'injection pour la fabrication, par exemple, de biens de consommation comme des pièces de téléphone portable ou d'ordinateur, impose en effet d'améliorer la résistance aux chocs et les propriétés thermomécaniques du PLA.

Pour améliorer de telles propriétés, et en particulier la résistance aux chocs de matériaux à base de polyacide lactique, on a proposé un matériau composite obtenu à partir d'une composition comprenant du polyacide lactique (PLA) et un polyamide. Toutefois, si la résistance aux chocs du matériau composite se trouve effectivement améliorée par l'ajout de polyamide dans la composition, on a observé que la rigidité se trouvait diminuée par rapport à celles d'un matériau réalisé à partir d'une composition dépourvue de polyamide et également que la résistance thermomécanique du matériau composite était insuffisante.

Pour renforcer simultanément la résistance aux chocs de tels matériaux composites tout en conservant rigidité et résistance thermomécanique, le document JP 2004-051835 décrit un matériau composite obtenu à partir d'une composition particulière comprenant 100 parties en poids de polyacide lactique et de 1 à 100 parties en poids d'un polyamide dit « souple ».

Le polyamide dit « souple » de la composition décrite dans le document JP 2004-051835 est défini comme étant un polyamide présentant un module d'élasticité en flexion inférieur à 2GPa, à température ambiante.

Toutefois, pour certaines applications telles que celles mentionnées ci-dessus (biens de consommation), on observe que la résistance aux chocs du matériau composite décrit dans le document JP 2004-051835 n'est encore pas entièrement satisfaisante.

En outre, la composition décrite dans le document JP 2004-051835 impose un choix particulier de polyamide, ce qui peut présenter un inconvénient en terme de coût par exemple.

Le but de la présente invention est donc de remédier aux inconvénients précités et de proposer un matériau composite qui présente une résistance aux chocs améliorée tout en conservant rigidité et résistance thermomécanique, notamment compatible avec un mode de fabrication par injection.

La présente invention concerne donc un matériau composite du type précité, c'est-à-dire un matériau composite qui est obtenu à partir d'une composition comprenant du polyacide lactique (PLA) et un polyamide.

Selon l'invention, ledit matériau composite est obtenu à partir d'une composition comprenant les polymères suivants :
- le polyacide lactique (PLA) qui forme la matrice ou phase continue du matériau,
- au moins un polyamide formant la phase dispersée dans la matrice de PLA,
- au moins une polyoléfine fonctionnalisée (A) comprenant des motifs alpha oléfine et des motifs époxyde, acide carboxylique ou anhydride d'acide carboxylique,
   ledit matériau ne comprenant pas de polyoxyméthylène (POM).

La polyoléfine fonctionnalisée (A) joue le rôle d'un agent compatibilisant entre le PLA et le PA et joue également le rôle d'agent nucléant du PLA, ce qui a pour intérêt d'améliorer les propriétés thermomécaniques du PLA.

La polyoléfine fonctionnalisée (A) peut en particulier être choisie parmi les polymères listés ci-après :
- les polymères blocs SBS, SIS, SEBS ou EPDM greffés :
   . par des époxydes insaturés, en particulier le (méth)acrylate de glycidyle,
   . par des acides carboxyliques, tel que l'acide (méth)acrylique, ou
   . par des anhydrides d'acides carboxyliques insaturés, tel que l'anhydride maléique ;
- les copolymères de l'éthylène, d'un époxyde insaturé et, de manière optionnelle, d'un ester, d'un sel d'acide carboxylique insaturé ou d'un ester vinylique d'acide carboxylique saturé. A titre d'exemples, on peut citer les terpolymères éthylène / acétate de vinyle / (méth)acrylate de glycidyle et éthylène / (méth)acrylate d'alkyle / (méth)acrylate de glycidyle ;
- les copolymères de l'éthylène, d'un anhydride d'acide carboxylique insaturé et, de manière optionnelle, d'un ester, d'un acide carboxylique insaturé pouvant être partiellement neutralisé par un métal (Zn) ou un alcalin (Li), d'un ester vinylique d'acide carboxylique saturé. A titre d'exemples, on peut citer les terpolymères éthylène / acétate de vinyle / anhydride maléique, éthylène / (méth)acrylate d'alkyle / anhydride maléique et éthylène / (méth)acrylate de Zn ou Li / anhydride maléique;
- le polyéthylène, le polypropylène, les copolymères éthylène / propylène greffés ou copolymérisés avec un anhydride d'acide carboxylique insaturé, éventuellement condensés avec un polyamide (ou un oligomère de polyamide) monoaminé. Ces composés sont décrits dans le document US 5,342,886.

Le (méth)acrylate d'alkyle cité ci-dessus peut notamment être choisi parmi l'acrylate de méthyle, l'acrylate d'éthyle, l'acrylate de n-butyle, l'acrylate d'isobutyle, l'acrylate d'éthyl-2-hexyle, l'acrylate de cyclohexyle, le méthacrylate de méthyle et le méthacrylate d'éthyle.

Dans une version particulièrement avantageuse de l'invention, le matériau composite est obtenu à partir d'une composition comprenant les polymères suivants, à l'exclusion du polyoxyméthylène (POM) :
- le polyacide lactique (PLA) formant la matrice du matériau,
- au moins un polyamide formant la phase dispersée du matériau,
- au moins une polyoléfine fonctionnalisée (A) choisie dans le groupe constitué par un terpolymère d'éthylène, d'ester acrylique et d'anhydride maléique, et un terpolymère d'éthylène, de méthylacrylate et de méthacrylate de glycidyle.

Les inventeurs ont observé que l'ajout d'au moins une polyoléfine fonctionnalisée (A) et, en particulier, de l'un et/ou de l'autre des terpolymères mentionnés ci-dessus à un mélange constitué de polyacide lactique et d'un polyamide, voire de plusieurs polyamides (sous réserve de faisabilité industrielle), conférait de remarquables propriétés de résistance aux chocs du matériau composite obtenu et, partant, des objets fabriqués à partir d'un tel matériau composite.

De telles propriétés de résistance aux chocs s'avèrent en tout état de cause très nettement supérieures à celles des matériaux composites de l'art antérieur à base des seuls polyacide lactique et polyamide(s).

L'amélioration de la résistance aux chocs est obtenue avec maintien de la rigidité et des propriétés thermomécaniques.

Parmi les terpolymères mentionnés ci-dessus, on peut notamment mettre en oeuvre ceux commercialisés, par la société Arkéma France, sous la dénomination commerciale Lotader®.

Contrairement à l'enseignement du document JP 2004-051835, le choix du polyamide n'est pas limité.

Au sens de la présente invention, le polyamide vise tout polycondensat obtenu, par polycondensation, à partir d'un même monomère ou de différents monomères et comportant au moins une fonction amide.

Le polyamide peut notamment être obtenu par la polycondensation de lactames, d'aminoacides ou de diacides avec des diamines, ainsi que de toutes les combinaisons possibles de deux ou plus de ces composés (par exemple, lactame + diacide + diamine, plusieurs diacides avec diamines,...).

A titre non limitatif, le polyamide (PA) peut être un polyamide du type PA X, avec X=6 à 12, ou du type PA X.Y, dit homopolymère, avec X=6 à 25 et Y=6 à 25, X et Y indiquant le nombre de carbones présents dans la chaîne de polyamide entre deux fonctions "amide".

De manière particulièrement avantageuse, le polyamide est obtenu à partir de monomères présentant la propriété d'être renouvelables, au même titre que le polyacide lactique.

Le polyamide constitue la phase dispersée du matériau, c'est-à-dire qu'il se présente sous forme de nodules de polyamide dispersés dans la matrice ou phase continue de polyacide lactique (PLA).

Dans une variante de l'invention, le matériau composite est obtenu à partir d'une composition comprenant les polymères suivants, à l'exclusion de polyoxyméthylène (POM) :
- le polyacide lactique (PLA),
- au moins un polyamide,
- au moins une polyoléfine fonctionnalisée (A) comprenant des motifs alpha oléfine et des motifs époxyde, acide carboxylique ou anhydride d'acide carboxylique et, plus préférentiellement, au moins une polyoléfine fonctionnalisée choisie dans le groupe constitué par un terpolymère d'éthylène, d'ester acrylique et d'anhydride maléique, et un terpolymère d'éthylène, de méthylacrylate et de méthacrylate de glycidyle,
   et, en outre,
- au moins une polyoléfine non fonctionnalisée (B).

La polyoléfine non fonctionnalisée (B) est un polymère comprenant des motifs "oléfine" tels que par exemple des motifs éthylène, propylène, butène-1, ou toute autre alpha oléfine.

La polyoléfine non fonctionnalisée (B) peut en particulier être choisie parmi les polymères listés ci-après :
- les polyéthylènes tels que LDPE, HDPE, LLDPE et VLDPE, le polypropylène, les copolymères éthylène /propylène, ou encore les polyéthylènes métallocènes ;
- les copolymères de l'éthylène, avec au moins un composé choisi parmi les sels ou esters d'acides carboxyliques insaturés, et les esters vinyliques d'acides carboxyliques saturés. A titre d'exemples, on peut citer les copolymères éthylène / acétate de vinyle et éthylène / (méth)acrylate d'alkyle.

La ou les polyoléfine(s) non fonctionnalisée(s) (B), en combinaison avec la ou les polyoléfine(s) fonctionnalisée(s) (A), permet(tent) également d'améliorer la résistance aux chocs du matériau composite selon l'invention tout en maintenant la viscosité à une valeur compatible avec les procédés de mélange des thermoplastiques.

Dans une version particulièrement avantageuse de l'invention, la polyoléfine non fonctionnalisée (B) est un copolymère d'éthylène et d'ester acrylique.

Préférentiellement, l'ester acrylique du copolymère d'éthylène et d'ester acrylique est choisi parmi l'acrylate de méthyle, l'acrylate d'éthyle et l'acrylate de butyle.

Parmi les copolymère d'éthylène et d'ester acrylique susceptibles d'être utilisés dans le cadre de la présente invention, on peut notamment citer ceux commercialisés, par la société Arkéma France, sous la dénomination commerciale Lotryl®.

Dans une autre variante de l'invention, les pourcentages pondéraux des différents polymères de la composition sont les suivants :
- de 40 à 80% en poids de polyacide lactique (PLA),
- de 5 à 40% en poids de polyamide(s),
- de 1 à 30% en poids de polyoléfine(s) fonctionnalisée(s) (A) et, le cas échéant, de polyoléfine(s) non fonctionnalisée(s) (B).

Préférentiellement, la teneur pondérale en polyoléfine(s) fonctionnalisée(s) (A), et éventuellement non fonctionnalisées (B), est comprise entre 5% (exclu) et 30% en poids de la composition totale.

Dans une autre variante de l'invention, la composition peut en outre comporter au moins un premier additif choisi parmi les colorants, les pigments, les azurants, les anti-oxydants et les stabilisants UV.

Avantageusement, ce ou ces premiers additifs peuvent représenter jusqu'à 5% en poids de la composition totale. De manière préférée, la proportion pondérale de ce(s) premier(s) additifs(s) est inférieure à 1% de la composition totale à partir de laquelle le matériau composite sera obtenu.

Dans une autre variante de l'invention, la composition peut également comprendre au moins un deuxième additif choisi parmi des fibres, des agents ignifugeants et des plastifiants.

Avantageusement, ce ou ces deuxièmes additifs peuvent représenter jusqu'à 65% en poids, et avantageusement jusqu'à 50% en poids, de la composition totale. De manière préférée, la proportion pondérale de ce(s) premier(s) additifs(s) est comprise entre 5 et 40% de la composition totale à partir de laquelle le matériau composite sera obtenu.

L'addition de fibres permet de renforcer notamment les propriétés mécaniques telles que le module de flexion, le module de traction ainsi que la rigidité du matériau composite selon l'invention.

De telles fibres peuvent être des fibres naturelles ou des fibres de synthèse. De telles fibres peuvent notamment être des fibres de verre.

Parmi les agents ignifugeants, on privilégiera les agents ignifugeants non halogénés.

A titre d'exemples de tels agents ignifugeants non halogénés, on peut citer les phosphates, les pyrophosphates et polyphosphates d'ammonium, les phosphates de mélamine, le phosphite de mélamine, le phosphite et le diphosphite de pipérazine, le phosphate de guanazole, le pyrophoshate de mélamine, le pyrophosphate de pipérazine et les phosphinates métalliques, en particulier ceux commercialisés par la société CLARIANT sous la dénomination commerciale Exolit® OP.

On peut également utiliser, comme agent ignifugeant non halogéné, du cyanurate de mélamine et /ou du pentaérythritol.

L'addition d'un ou plusieurs plastifiants permet, entre autres, de moduler les propriétés mécaniques et en particulier d'assouplir le matériau composite selon l'invention.

La présente invention concerne également un procédé de fabrication du matériau composite qui vient d'être décrit.

Selon l'invention, ce procédé comprend une étape de mélange des différents polymères et, le cas échéant, le ou les premiers et/ou deuxièmes additif(s) selon les techniques classiquement utilisées dans le domaine des polymères et, notamment, par compoundage, par exemple au moyen d'une bi-vis.

En outre, la présente invention se rapporte également à l'utilisation d'un tel matériau composite ainsi qu'à un objet fabriqué à partir d'un tel matériau composite.

La présente invention va être maintenant illustrée par un exemple particulier de réalisation qui va être décrit ci-après. Il est précisé que cet exemple ne vise en aucun cas à limiter la portée de la présente invention.

### Exemple (essais 1 à 3)

Dans le cadre des essais 1 à 3, le protocole opératoire de préparation des matériaux composites est strictement identique, à l'exception des proportions pondérales des polymères mis en oeuvre.

Le polyacide lactique, ou PLA, utilisé dans le cadre des essais 1 à 3 est commercialisé par Natureworks, sous la référence 2002D.

Le polyamide 11, ou PA 11, utilisé dans le cadre des essais 1 à 3 est commercialisé par Arkéma France, sous la référence BECN O TL.

Le terpolymère utilisé dans le cadre des essais 1 et 2 est un terpolymère d'éthylène (67% pondéral), de méthylacrylate (25% pondéral) et de méthacrylate de glycidyle (8% pondéral), commercialisé par Arkéma France, sous la référence Lotader AX8900.

Dans les essais 1 à 3, le PLA, le PA 11 et, le cas échéant, le terpolymère sont introduits, sous forme de granulés, simultanément dans une bi-vis (Werner 30) pour être mélangés (débit 15 kg/h, vitesse de rotation 190 tr/min, température: 170 à 210°C).

Les proportions pondérales de chacun des polymères introduits dans les essais 1 à 3 conduits sont données dans le tableau 1 ci-dessous.

**Tableau 1**

| Essai | PLA (parties en poids) | PA 11 (parties en poids) | Terpolymère (parties en poids) |
|---|---|---|---|
| 1 | 65 | 20 | 15 |
| 2 | 68 | 25 | 7 |
| 3 | 70 | 30 | 0 |

Le matériau composite obtenu en sortie de bi-vis se présente sous la forme de granulés.

Ces granulés sont alors injectés dans une presse à injection, à une température de 220°C pour façonner des barreaux de dimension 80x10x4 mm³.

Les barreaux obtenus sont alors entaillés puis les mesures de résistance aux chocs effectuées, à différentes températures (de -40°C à + 40°C), selon la méthode Izod (ASTMD 256).

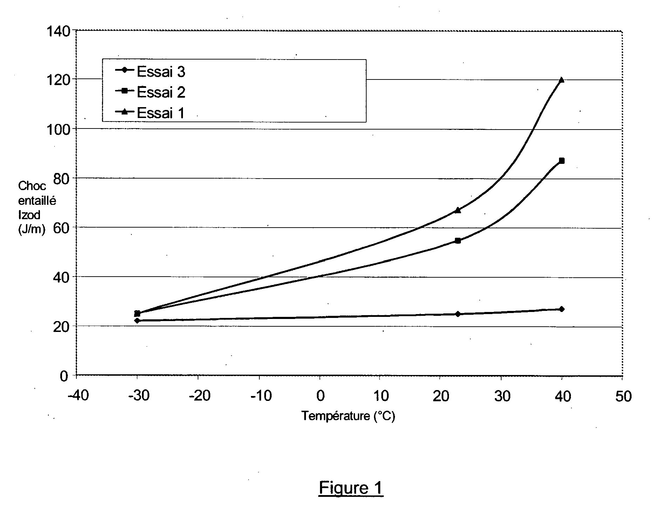

Les mesures obtenues sont représentées sur la figure 1.

On observe que la résistance aux chocs est nettement améliorée avec les matériaux composites obtenus lors des essais 1 et 2, par rapport à celui issu de l'essai 3.

Cette résistance aux chocs est améliorée même en présence d'une faible proportion pondérale de terpolymère.

Les avantages en termes d'application des matériaux composites conformes à l'invention sont nombreux au vu des résultats de résistance aux chocs, en l'absence de modification signification du procédé de fabrication de matériaux composites à base de polyamide et de polyacide lactique seulement (PLA-PA).

Le matériau composite selon l'invention peut bien évidemment être utilisé pour la fabrication d'objets, tels que les biens de consommation indiqués ci-avant. A titre non limitatif, on peut citer la fabrication d'objets moulés, d'objets injectés, d'objets extrudés ou d'objets thermoformés. Ces derniers peuvent se présenter sous la forme de films, plaques, tubes,...

Les objets obtenus à partir de la mise en oeuvre du matériau composite, et notamment les objets moulés, objets injectés, d'objets extrudés ou objets thermoformés présentent une résistance aux chocs très nettement améliorée par rapport à celle d'objets de même nature qui auraient été obtenu à partir de la mise en oeuvre d'un matériau composite du type PLA-PA.

## Revendications

1. Matériau composite présentant une résistance aux chocs améliorée, ledit matériau composite étant obtenu à partir d'une composition comprenant les polymères suivants :
- du polyacide lactique (PLA) qui forme la matrice,
- au moins un polyamide formant une phase dispersée dans la matrice de PLA,
- au moins une polyoléfine fonctionnalisée (A) comprenant des motifs alpha oléfine et des motifs époxyde, acide carboxylique ou anhydride d'acide carboxylique,
et, de manière optionnelle,
- au moins une polyoléfine non fonctionnalisée (B),
ledit matériau ne comprenant pas de polyoxyméthylène (POM).

2. Matériau composite selon la revendication 1, **caractérisé en ce qu'**au moins une polyoléfine fonctionnalisée (A) est choisie dans le groupe constitué par
un terpolymère d'éthylène, d'ester acrylique et d'anhydride maléique, et
. un terpolymère d'éthylène, de méthylacrylate et de méthacrylate de glycidyle.

3. Matériau composite selon la revendication 1 ou 2, **caractérisé en ce que** la polyoléfine non fonctionnalisée (B) est un copolymère d'éthylène et d'ester acrylique.

4. Matériau composite selon la revendication 3, **caractérisé en ce que** l'ester acrylique du copolymère d'éthylène et d'ester acrylique est l'acrylate de méthyle, l'acrylate d'éthyle ou l'acrylate de butyle.

5. Matériau composite selon l'une quelconque des revendications 1 à 4, **caractérisé en ce que** les pourcentages pondéraux des différents polymères sont les suivants :
- de 40 à 80% en poids de polyacide lactique (PLA),
- de 5 à 40% en poids de polyamide(s), ,
- de 1 à 30% en poids de polyoléfine(s) fonctionnalisée(s) (A) et, le cas échéant, de polyoléfine(s) non fonctionnalisée(s) (B).

6. Matériau composite selon l'une quelconque des revendications 1 à 5, **caractérisé en ce que** la composition comprend en outre au moins un premier additif choisi parmi les colorants, les pigments, les azurants, les anti-oxydants et les stabilisants UV.

7. Matériau composite selon l'une quelconque des revendications 1 à 6, **caractérisé en ce que** la composition comprend en outre au moins un deuxième additif choisi parmi les fibres, les agents ignifugeants et les plastifiants.

8. Procédé de fabrication du matériau composite selon l'une quelconque des revendications 1 à 7 comprenant une étape de mélange des différents polymères par compoundage, par exemple au moyen d'une bi-vis.

9. Utilisation du matériau composite selon l'une quelconque des revendications 1 à 7 pour la fabrication d'objets, notamment d'objets moulés, injectés, extrudés ou thermoformés.

10. Objet, notamment objet moulé, objet injecté, objet extrudé ou objet thermoformé, obtenu à partir de la mise en oeuvre du matériau composite selon l'une quelconque des revendications 1 à 7.

## Claims

1. Composite having improved impact strength, said composite being obtained from a composition comprising the following polymers:
- polylactic acid (PLA), which forms the matrix;
- at least one polyamide, which forms a dispersed phase in the PLA matrix;
- at least one functionalized polyolefin (A) comprising α-olefin units
and epoxide, carboxylic acid or carboxylic acid anhydride units; and, optionally,
- at least one unfunctionalized polyolefin (B),
said composite not comprising polyoxymethylene (POM).

2. Composite according to Claim 1, **characterized in that** at least one functionalized polyolefin (A) is chosen from the group formed by:
- an ethylene/acrylic ester/maleic anhydride terpolymer; and
- an ethylene/methyl acrylate/glycidyl methacrylate terpolymer.

3. Composite according to Claim 1 or 2, **characterized in that** the unfunctionalized polyolefin (B) is an ethylene/acrylic ester copolymer.

4. Composite according to Claim 3, **characterized in that** the acrylic ester of the ethylene/acrylic ester copolymer is methyl acrylate, ethyl acrylate or butyl acrylate.

5. Composite according to any one of Claims 1 to 4, **characterized in that** the percentages by weight of the various polymers are the following:
- 40 to 80% by weight of polylactic acid (PLA);
- 5 to 40% by weight of one or more polyamides; and
- 1 to 30% by weight of one or more functionalized polyolefins
(A) and, where appropriate, one or more unfunctionalized polyolefins (B).

6. Composite according to any one of Claims 1 to 5, **characterized in that** the composition further includes at least one first additive chosen from dyes, pigments, brighteners, antioxidants and UV stabilizers.

7. Composite according to any one of Claims 1 to 6, **characterized in that** the composition further includes at least one second additive chosen from fibres, fire retardants and plasticisers.

8. Process for manufacturing the composite according to any one of Claims 1 to 7, which includes a step of blending the various polymers by compounding, for example by means of a twin-screw extruder.

9. Use of the composite according to any one of Claims 1 to 7 for the manufacture of articles, especially compression-molded, injection-molded, extruded or thermoformed articles.

10. Article, especially a compression-molded, injection-molded, extruded or thermoformed article, obtained using the composite according to any one of Claims 1 to 7.

## Patentansprüche

1. Verbundwerkstoff mit verbesserter Schlagzähigkeit, wobei der Verbundwerkstoff aus einer Zusammensetzung erhalten wird, die die folgenden Polymere enthält:
- Polymilchsäure (PLA), die die Matrix bildet,
- mindestens ein Polyamid, das die in der PLA-Matrix dispergierte Phase bildet,
- mindestens ein funktionalisiertes Polyolefin (A) mit alpha-Olefin- und Epoxid-, Carbonsäure- oder Carbonsäureanhydrid-Einheiten
und gegebenenfalls
- mindestens ein nicht funktionalisiertes Polyolefin (B),
wobei der Werkstoff kein Polyoxymethylen (POM) enthält.

2. Verbundwerkstoff nach Anspruch 1, **dadurch gekennzeichnet, daß** mindestens ein funktionalisiertes Polyolefin (A) aus der Gruppe bestehend aus
- einem Terpolymer von Ethylen, Acrylsäureester und Maleinsäureanhydrid und
- einem Terpolymer von Ethylen, Methylacrylat und Glycidylmethacrylat
ausgewählt ist.

3. Verbundwerkstoff nach Anspruch 1 oder 2, **dadurch gekennzeichnet, daß** es sich bei dem nicht funktionalisierten Polyolefin (B) um ein Copolymer von Ethylen und Acrylsäureester handelt.

4. Verbundwerkstoff nach Anspruch 3, **dadurch gekennzeichnet, daß** es sich bei dem Acrylsäureester des Copolymers von Ethylen und Acrylsäureester um Methylacrylat, Ethylacrylat oder Butylacrylat handelt.

5. Verbundwerkstoff nach einem der Ansprüche 1 bis 4, **dadurch gekennzeichnet, daß** die Gewichtsprozentanteile der verschiedenen Polymere sich auf
- 40 bis 80 Gew.-% Polymilchsäure (PLA),
- 5 bis 40 Gew.-% Polyamid(e),
- 1 bis 30 Gew.-% funktionalisiertes Polyolefin bzw. funktionalisierte Polyolefine (A) und gegebenenfalls nicht funktionalisiertes Polyolefin bzw. nicht funktionalisierte Polyolefine (B)
belaufen.

6. Verbundwerkstoff nach einem der Ansprüche 1 bis 5, **dadurch gekennzeichnet, daß** die Zusammensetzung außerdem mindestens ein erstes Additiv, das unter Farbmitteln, Pigmenten, optischen Aufhellern, Antioxidantien und UV-Stabilisatoren ausgewählt ist, enthält.

7. Verbundwerkstoff nach einem der Ansprüche 1 bis 6, **dadurch gekennzeichnet, daß** die Zusammensetzung außerdem mindestens ein erstes Additiv, das unter Fasern, Flammschutzmitteln und Weichmachern ausgewählt ist, enthält.

8. Verfahren zur Herstellung des Verbundwerkstoffs nach einem der Ansprüche 1 bis 7 mit einem Schritt, bei dem man die verschiedenen Polymere durch Compoundieren, beispielsweise mit Hilfe eines Doppelschneckenextruders, mischt.

9. Verwendung des Verbundwerkstoffs nach einem der Ansprüche 1 bis 7 zur Herstellung von Gegenständen, insbesondere Formteilen, Spritzgußteilen, Extrudaten oder thermogeformten Gegenständen.

10. Gegenstand, insbesondere Formteil, Spritzgußteil, Extrudat oder thermogeformter Gegenstand, erhalten unter Verwendung des Verbundwerkstoffs nach einem der Ansprüche 1 bis 7.
